(19) Europäisches Patentamt
European Patent Office
Office européen des brevets

(11) **EP 1 901 057 A1**

(12) **EUROPEAN PATENT APPLICATION**
published in accordance with Art. 153(4) EPC

(43) Date of publication:
**19.03.2008 Bulletin 2008/12**

(51) Int Cl.:
*G01N 21/64* [(2006.01)]   *G01B 11/30* [(2006.01)]
*G01N 33/53* [(2006.01)]   *G01N 33/543* [(2006.01)]
*G01N 33/566* [(2006.01)]

(21) Application number: **06766971.3**

(22) Date of filing: **20.06.2006**

(86) International application number:
**PCT/JP2006/312310**

(87) International publication number:
**WO 2007/007519 (18.01.2007 Gazette 2007/03)**

(84) Designated Contracting States:
**DE FR GB**

(30) Priority: **07.07.2005 JP 2005198924**

(71) Applicant: **Sony Corporation**
**Minato-ku**
**Tokyo (JP)**

(72) Inventors:
• **KATSUMOTO, Yoichi**
**c/o SONY CORPORATION**
**Shinagawa-ku, Tokyo 1410001 (JP)**

• **KISHII, Noriyuki**
**c/o SONY CORPORATION**
**Shinagawa-ku, Tokyo 1410001 (JP)**

(74) Representative: **Robinson, Nigel Alexander Julian**
**D Young & Co**
**120 Holborn**
**London EC1N 2DY (GB)**

(54) **SUBSTANCE INFORMATION ACQUISITION METHOD AND SUBSTANCE INFORMATION MEASUREMENT DEVICE USING EVANESCENT LIGHT, AND BASE ARRANGEMENT DECISION METHOD AND DEVICE**

(57) Information on the position and displacement of a detection-subject substance T can be presented by adoption an evanescent light illumination technology. An evanescent light beam PE has a property that the intensity thereof abruptly attenuates in accordance with an exponential function with increases in distance Z from a boundary surface S capable of generating the evanescent light beam PE. The detection-subject substance T fixed on the boundary surface S is excited by the evanescent light beam PE having the property described, generating the original fluorescent light beam f of the detection-subject substance T. On the basis of the intensity I of the fluorescent light beam f, information Z on the position of the detection-subject substance T and information $\Delta z$ on the displacement of the detection-subject substance T can be acquired. In addition, by making use of the information Z and the information $\Delta z$, it is possible to obtain information on the structure of the detection-subject substance T, its structural change, a base sequence of a nucleic acid chain serving as the detection-subject substance T, the existence/non-existence of substance interactions and the state of progress of the interactions.

FIG.2

**Description**

[Technical Field]

The present invention relates to a substance information acquisition technology making use of evanescent light beam. To put it in detail, the present invention relates to a technology for measuring or determining, among others, the structure, shape, interactions and base sequence of a substance fixed on a boundary surface by making use of an evanescent light beam as a fluorescent-light exciting light beam.

[Background Art]

There are a variety of methods for measuring a positional change (or a displacement) of a substance for different sizes of the substance serving as the subject of measurement. For small sizes greater than a microscale size, the length and displacement of a substance can be measured by making use of an optical microscope or the like. However, it is not possible to obtain a size change (or another change) of a nano-scale substance subjected to a physical or chemical reaction by making use of an optical microscope having a horizontal-resolution limit of several hundreds of nanometers.
A measurement tool such as an electronic microscope is not capable of measuring a dynamic change in any arbitrary state due to problems caused by, among others, the fact that the measurement is carried out in a vacuum or in a space requiring vapor. For example, it is impossible to observe a displacement accompanying a structural change of a protein and/or a DNA in a liquid. However, an AFM (Atomic Force Microscope) can be used for measuring such a displacement even though the measurement preparation and the measurement operations are difficult to carry out, raising a problem that the degree of measurement reliability undesirably depends on a search needle employed in the AFM as a search needle varying from AFM to AFM. In addition, when it is desired to obtain a dynamic change of a small time scale, it is impossible to apply an AFM, which demands a measurement time of about several tens of minutes as a time period for taking an image.
By the way, it is known that, when an incident light beam enters a medium with a relatively small refractive index from a medium with a relatively large refractive index under a total reflection condition, which is a condition requiring that an incidence angle be at least equal to a critical angle, an evanescent light beam is generated in a boundary-surface vicinity field on a boundary-surface side opposite to a boundary-surface side through which the incident light beam is propagating in the forward direction toward a boundary surface. The intensity of the evanescent light beam abruptly attenuates in accordance with an exponential function with increases of a distance from the boundary surface.
Technologies each used for analyzing the behavior and/or state of a substance by making use of an evanescent light beam are disclosed in Japanese Patent Laid-open No. 2003-294631 and Japanese Patent Laid-open No. Hei. 10-221339. To put it in detail, Japanese Patent Laid-open No. 2003-294631 discloses a technology in accordance with which a fluorescent label is put in advance on a detection-subject substance in a cell, a fluorescent signal emitted by the detection-subject substance is detected at a plurality of points along the time axis while an evanescent illumination is being carried out and the behavior and/or state of every molecule in the detection-subject substance are analyzed on the basis of detected changes in fluorescent signal. On the other hand, Japanese Patent Laid-open No. Hei. 10-221,339 discloses a technology in accordance with which a fluorescent label is put in advance on a chromosome and, typically, an evanescent light beam is radiated to the chromosome in order to observe the structure of the chromosome as well as the sequence of genes on the chromosome and/or the state of the genes.
At the present time, development of detection and measurement technologies has been started gradually. The detection and measurement technologies being developed are each a technology for detecting and measuring information on interactions between substances, information on the state of a substance and information on the movement of a substance on the basis of a detection principle such as a crystal-oscillator principle, a surface plasmon resonance principle or an excited fluorescent light beam principle. However, each of the technologies is still at a stage with room for improvement of the detection precision. That is to say, each of the technologies is not yet a technology capable of accurately acquiring information on interactions between substances as well as information on the state and movement of a substance at a nano-scale level.
It is thus a main object of the present invention to provide a new technology for acquiring information on the position and displacement of a substance particularly at a nano-scale level by adoption of an evanescent light beam illumination technology as well as provide a new technology for accurately detecting or measuring, among others, interactions, state and movement of substances by making use of the information.

[Disclosure of the Invention]

When an incident light beam enters a medium with a relatively small refractive index from a medium with a relatively large refractive index under a total reflection condition, which is a condition requiring that an incidence angle be at least equal to a critical angle, an evanescent light beam (or an evanescent wave signal) is generated in a boundary-surface vicinity field on a boundary-surface side opposite to a boundary-surface side through which the incident light beam is propagating in the forward direction toward a boundary surface. The present invention makes use of a property exhibited by the evanescent light beam as a property of the evanescent-light intensity decreasing abruptly in accordance with an exponential function with increases of a distance from the boundary surface.

First of all, the present invention provides a substance-information acquisition method for acquiring the positional information of a detection-subject substance on the basis of the intensity of a fluorescent light beam excited by an evanescent light beam generated by a boundary-surface area, in which the detection-subject substance has been put in advance, as the original light beam of the detection-subject substance.

That is to say, main characteristics of the present invention include the fact that: (1) a detection-subject substance is put in advance in a boundary-surface vicinity field (strictly speaking, a boundary-surface vicinity field on a boundary-surface side opposite to a boundary-surface side through which the incident light beam is propagating in the forward direction toward a boundary surface), which is a radiation range of an evanescent light beam; (2) an evanescent light beam generated by the boundary surface is used as a fluorescent-light exciting light beam for exciting generation of a fluorescent light beam; and (3) The evanescent light beam excites a fluorescent light beam inherent in a chromatophore artificially put as a label on the detection-subject substance or the detection-subject substance itself and the positional information of the detection-subject substance is acquired from the intensity of the fluorescent light beam. The positional information of the detection-subject substance can be acquired at a nano-scale level and is useful for examination of interactions between substances, the state of a substance and the movement of a substance.

It is to be noted that the term "detection-subject substance" used in descriptions of the present invention means a substance, information on which is acquired. A detection-subject substance is put permanently or temporarily in a boundary-surface area, which generates an evanescent light beam. Typically, a detection-subject substance is put in a boundary-surface area by fixing or holding the substance to the area. The term "positional information" includes both information on a distance between the position of a fluorescent light beam generator and the boundary surface and information on changes in information on such a distance. The fluorescent light beam generator is a chromatophore artificially put as a label on the detection-subject substance or a fluorescent light beam generation member in the detection-subject substance. In the following description, the position of a fluorescent light beam generator is referred to as a fluorescent-light generating position.

In accordance with the present invention, if a physical or chemical condition of a reaction field in which a detection-subject substance exists changes (due to an artificial operation for example), by acquiring information on the intensity of a fluorescent light beam generated by the detection-subject substance before and after the change in condition, it is possible to obtain the positional information of the detection-subject substance or, to put it in detail, it is possible to obtain information on the order of a change in distance between the fluorescent-light generating position on the detection-subject substance and the boundary surface. If such a displacement is brought about by a change of the structure and/or shape of the detection-subject substance, the information on the displacement becomes information on an effect of the change in physical or chemical condition on the structure and/or shape of the substance. The structure of a detection-subject substance means first-order, second-order, third-order and high-order structures of the detection-subject substance.

In addition, in accordance with the present invention, by monitoring the intensity of an excited fluorescent light beam in a real-time manner, it is possible to keep track of changes occurring in the positional information of the detection-subject substance with the lapse of time. Thus, for example, it is possible to acquire information on a movement made by the detection-subject substance itself due to a change in external condition and information on the progress of an interaction involving the substance.

In addition, in accordance with the present invention, the positional information of a detection-subject substance may be determined by correcting data related to the measured intensity of the fluorescent light beam on the basis of standard data in order to improve the reliability of the measured data. Typically, the standard data is different pieces of fluorescent-light intensity data obtained in advance for a variety of distances from a boundary surface to fluorescent label substances each prepared in advance as a fluorescent label substance having an accurately determined molecular length. As many such fluorescent label substances as required are prepared in advance as fluorescent label substances having molecular lengths different from each other. These pieces of fluorescent-light intensity data accurately each reflect a fluorescent-light intensity according to a distance from the boundary surface.

The present invention provides a substance-information measurement apparatus including: a light source; a boundary surface capable of generating an evanescent light beam due to a light beam generated by the light source to hit the boundary surface; a fluorescent light detection section for detecting the intensity of a fluorescent light beam generated by a detection-subject substance existing on the boundary surface as a substance excited by the evanescent light beam; and an analysis section for automatically analyzing the position and/or displacement of the detection-subject substance in a reaction field on the basis of the intensity of the fluorescent light beam and an attenuation rate exhibited by the evanescent light beam as an attenuation rate having a correlation with a distance from the boundary surface. In addition, the substance-information measurement apparatus may be further provided with a reaction-field condition control section capable of changing a physical or chemical condition of the reaction field provided on a boundary-surface side opposite to a boundary-surface side, through which the incident light beam is propagating in the forward direction toward the boundary surface from the light source, as a field facing the boundary surface.

The reaction-field condition control section employed in the substance-information measurement apparatus is means capable of artificially controlling the physical or chemical condition of the reaction field. The reaction-field condition control section includes condition operating means capable of freely operating conditions such as the temperature, the pH quantity, the pressure, the substance concentration, the salt concentration and the solvent type, field applying means for applying an electric field to the reaction field and means capable of selectively and freely operating the condition operating means and the field applying means.

In addition, the present invention provides a base-sequence determination method for determining a base sequence of a single-strand nucleic acid chain or a base sequence of a double-strand nucleic acid chain by execution of procedures for: letting a protein be held in advance in a boundary-surface area capable of generating an evanescent light beam as a protein having a structure, which changes when the protein is joined to a base of the single-strand nucleic acid chain or a base pair of the double-strand nucleic acid chain; joining the protein to the single-strand nucleic acid chain or the double-strand nucleic acid chain; continuously measuring the intensity of a fluorescent light beam, which is generated by the protein excited by the evanescent light beam as the original fluorescent light beam of the protein, along the time axis; and automatically collating fluorescent-light intensity data obtained as a result of the continuous-measurement procedure with a fluorescent-light intensity database provided for the protein as a database reflecting correlations with types of the base or types of the base pair. The protein that can be used in the present invention can be selected from those each having a property showing a structure changing due to the procedure for joining the protein to a single-strand nucleic acid chain or a double-strand nucleic acid chain. For example, the protein that can be used in the present invention is a protein changing its structure in recognition units each composed of a plurality of aforementioned bases or a plurality of aforementioned base pairs. It is to be noted that methods for detecting the intensity of a fluorescent light beam generated by the protein include: a method whereby a fluorescent substance is put on the protein in advance as a label and then the intensity of a fluorescent light beam generated by the fluorescent substance is detected; and a method whereby the intensity of a fluorescent light beam generated by an amino acid composing the protein itself is detected. A proper one of the methods for detecting the intensity of a fluorescent light beam generated by the protein is selected in accordance with the objective.

In addition, the present invention provides a base-sequence determination apparatus including: a boundary surface for holding a protein having a structure, which changes when the protein is joined to a base of a single-strand nucleic acid chain or a base pair of a double-strand nucleic acid chain, after putting a fluorescent substance on the protein in advance as a mark and for generating an evanescent light beam; a fluorescence-intensity detection section capable of continuously measuring the intensity of a fluorescent light beam generated by the fluorescent substance as the original fluorescent light beam of the protein excited by the evanescent light beam; a database storage section used for storing a fluorescent-light intensity database provided for the protein as a database reflecting correlations with types of the base of the single-strand nucleic acid chain or types of the base pair of the double-strand nucleic acid chain; and a data processing section for automatically collating fluorescent-light intensity data obtained as a result of the measurement carried out by the fluorescence-intensity detection section with the fluorescent-light intensity database in order to determine a base sequence of the single-strand nucleic acid chain or a base sequence of the double-strand nucleic acid chain.

That is to say, the base-sequence determination method and the base-sequence determination apparatus are characterized in that a base sequence of a single-strand nucleic acid chain or a double-strand nucleic acid chain is determined by automatically collating fluorescent-light intensity data with a fluorescent-light intensity database prepared in advance for a protein as a database reflecting correlations with types of a base of the single-strand nucleic acid chain or types of a base pair of the double-strand nucleic acid chain. The fluorescent-light intensity data is obtained by continuously keeping track of changes observed in the intensity of a fluorescent light beam (or changes observed in the position of a fluorescent substance) when the structure of the protein changes in accordance with the type of the base or the type of the base pair in a movement made by the protein held (for example, fixed) in a boundary-surface area along the single-strand nucleic acid chain or the double-strand nucleic acid chain.

With the present invention, by illuminating an evanescent light beam, it is possible to acquire information on the position of a substance fixed on a boundary surface and/or information on a displacement of the substance. In particular, it is possible to acquire the information on the position and/or the information on a displacement at a nano-scale level. To put it in detail, it is possible to precisely find numerical values representing the information on the nano-scale level position of a detection-subject substance and information on a nano-scale level displacement of the substance by adoption of a non-contact technique. It is thus possible to determine the existence/non-existence of interactions between substances, measure the progress of the interactions, obtain information the structure of a substance, obtain information on the state such as the base sequence of a substance and measure the movement of a substance.

[Brief Description of Drawings]

[Fig. 1]

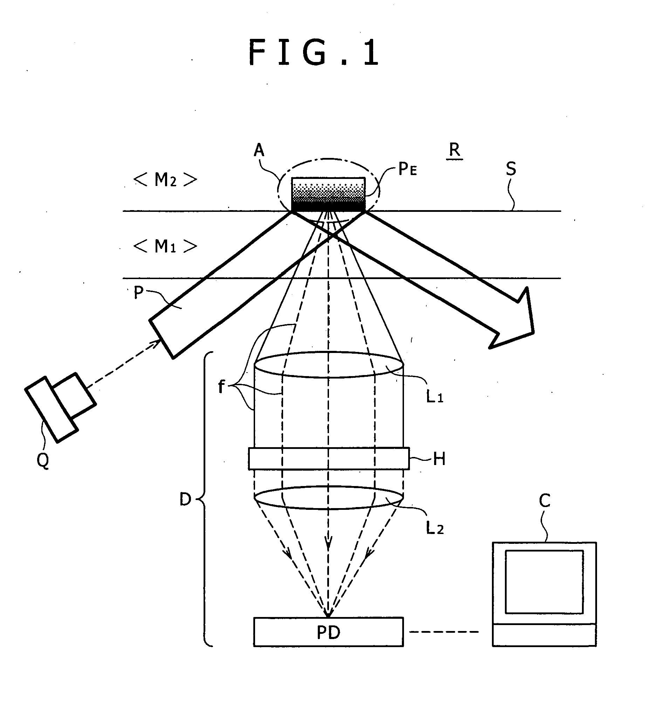

Fig. 1 is an explanatory diagram to be referred to in describing the basic principle of radiation of an evanescent light beam used in a substance-information acquisition method and a substance-information measurement apparatus, which are provided by the present invention.
[Fig. 2]

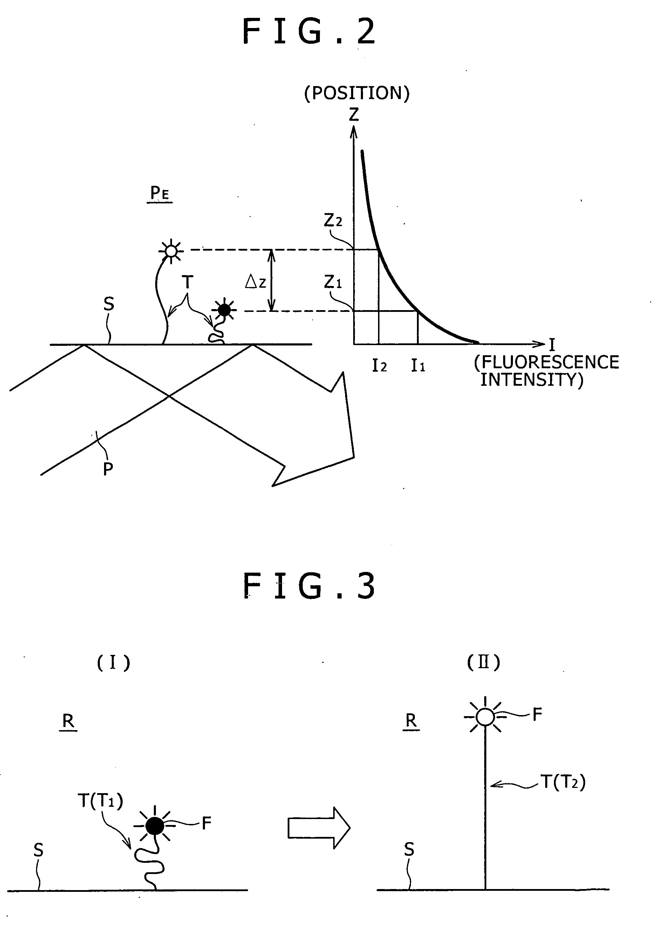

Fig. 2 is another explanatory diagram to be referred to in describing the same basic principle.
[Fig. 3]
Fig. 3 is a diagram to be referred to in describing a typical concept of a method for detecting the fact that a nucleic acid chain changes to a state of being extended in a typical application of the present invention.
[Fig. 4]

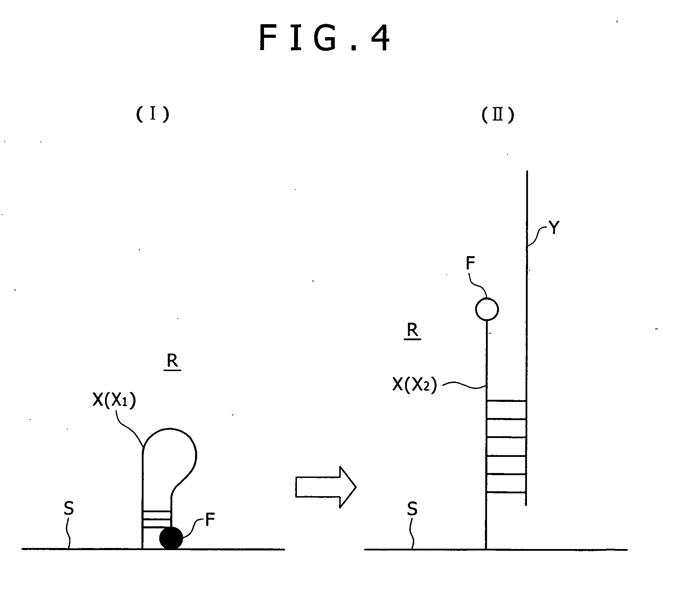

Fig. 4 is a diagram to be referred to in describing a typical concept of a method for detecting a hybridization in a typical application of the present invention.
[Fig. 5]

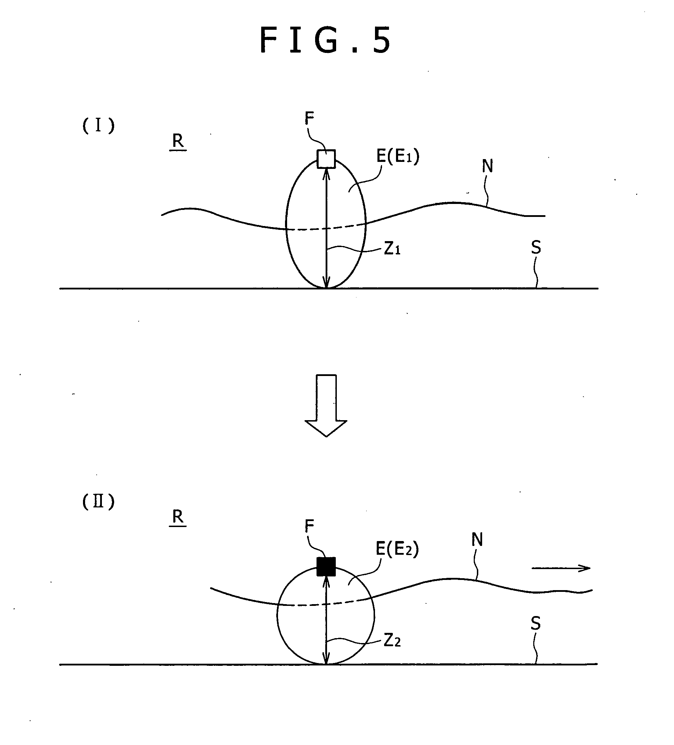

Fig. 5 is a diagram showing a model of a concept according to an embodiment implementing either of a sequence-base determination method and a sequence-base determination apparatus, which are provided by the present invention.
[Fig. 6]

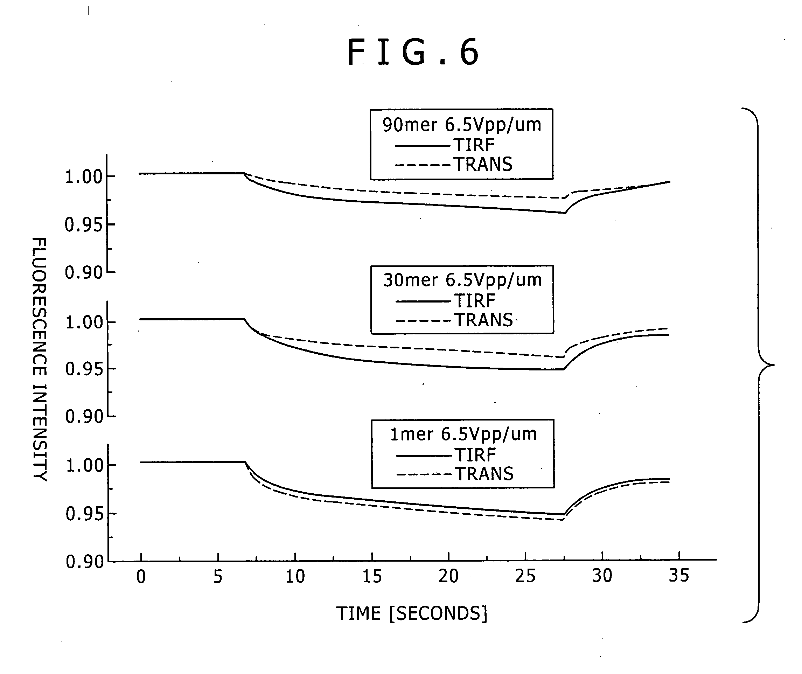

Fig. 6 is a diagram showing graphs representing results of experiments according to a first embodiment.
[Fig. 7]

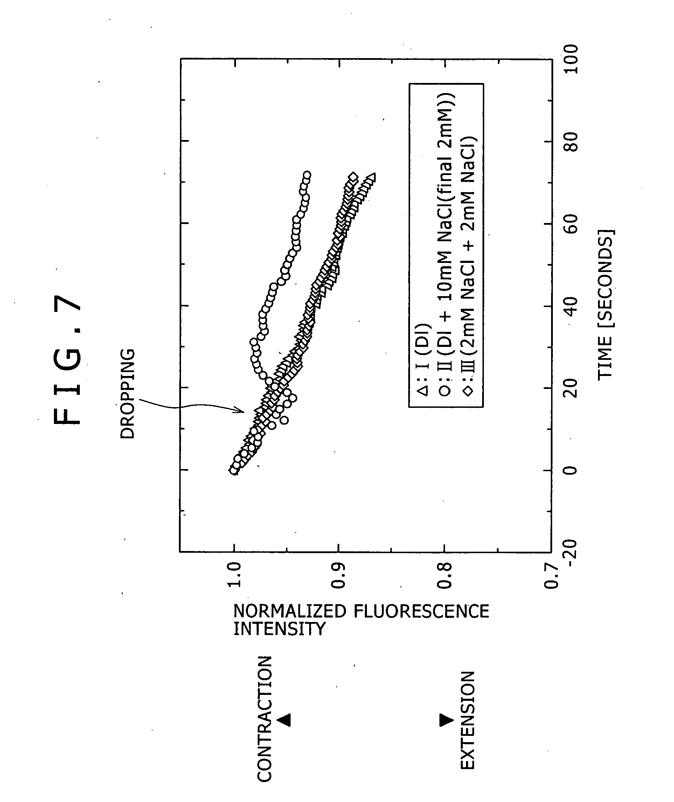

Fig. 7 is a diagram showing graphs representing results of experiments according to a second embodiment.
[Fig. 8]

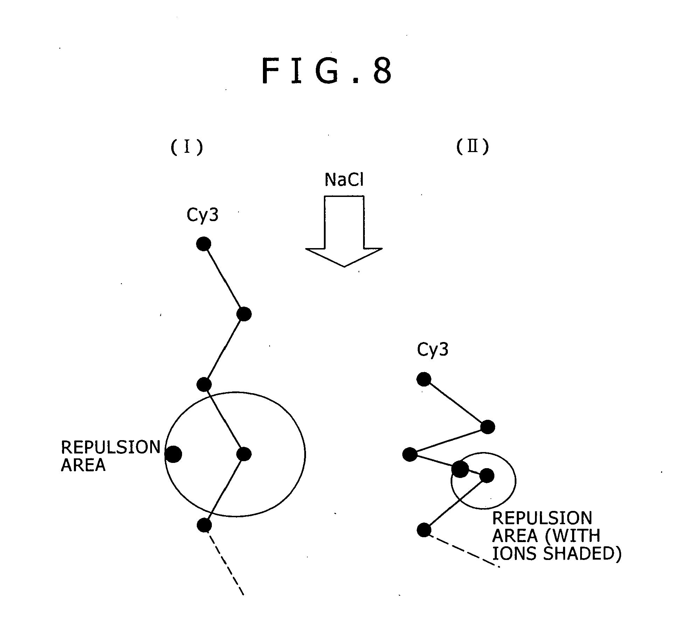

Fig. 8 is a diagram showing the state of structure changes of an ssDNA according to the second embodiment.

[Best Mode for Carrying out the Invention]

Preferred embodiments of the present invention are explained by referring to accompanying diagrams as follows. It is to be noted that the embodiments shown in the accompanying diagrams are representative embodiments of the present invention and not to be interpreted as embodiments narrowing the range of the embodiments.
To begin with, Figs. 1 and 2 are each an explanatory diagram to be referred to in describing the basic principle of radiation of an evanescent light beam used in a substance-information acquisition method and an substance-information measurement apparatus, which are provided by the present invention.
Fig. 1 shows a substance-information measurement apparatus including: a light source Q; a boundary surface S allowing light beams P emitted by the light source Q to generate evanescent light beams PE; a fluorescent-light intensity detection section D for detecting the intensity of fluorescent light beams f generated by a detection-target substance (not shown in Fig. 1) placed in a vicinity field A existing in close proximity to the boundary surface S as fluorescent light beams f excited by the evanescent light beams PE; and an analysis section C for automatically analyzing the position and/or displacement of the detection-subject substance in a reaction field R on the basis of information on a deterioration rate correlated with a distance from the boundary surface as deterioration rate of the evanescent light beams PE.
It is to be noted that methods for detecting the intensity of a fluorescent light beam generated by the detection-subject substance include: a method whereby a fluorescent substance is put on the detection-subject substance in advance as a label and then the intensity of a fluorescent light beam generated by the fluorescent substance is detected; and a method whereby the intensity of a fluorescent light beam generated by a fluorescent-light emitting substance composing the detection-subject substance itself is detected.
A proper one of the methods for detecting the intensity of a fluorescent light beam generated by the detection-subject substance is selected in accordance with the objective.
If necessary, the fluorescent-light intensity detection section D is provided with: a lens L1 for converging fluorescent light beams f in order to convert the fluorescent light beams f into parallel light beams f; a PD (photo detector); a lens L2 for converging the parallel fluorescent light beams f on the PD; a filter H for removing progressing light beams P mixed with the fluorescent light beams f from the fluorescent light beams f; and a mirror such as a dichroic mirror (not shown in the figure) for changing the forward propagation direction of the fluorescent light beams f.
The analysis section C is a computer including a database. Intensities of the fluorescent light beam f and attenuation rates each exhibited by the evanescent light beam PE as an attenuation rate having a correlation with a distance from the boundary surface are stored in advance as the database. The analysis section C executes a program stored therein as a program for collating an actually measured intensity of the fluorescent light beam f with the database in order to automatically find the position of a fluorescent substance, which serves as a source generating the fluorescent light beams, that is, in order to automatically find the distance from the boundary surface S to the fluorescent substance.

The basic principle of radiation of an evanescent light beam is explained as follows. When an incident light beam P generated by the source Q enters a medium M2 with a relatively small refractive index from a medium M1 with a relatively large refractive index under a total reflection condition, which is a condition requiring that an incidence angle be at least equal to a critical angle, an evanescent light beam (an evanescent wave beam) PE is generated in a boundary-surface vicinity field A on a boundary-surface side opposite to a boundary-surface side through which the incident light beam P is propagating in the forward direction toward the boundary surface S. The intensity (the second power of the electric field) of the evanescent light beam PE has a property of abruptly attenuating in accordance with an exponential function with increases in distance Z from the boundary surface S as shown in Fig. 2. This property can be explained concretely by making use of a set of equations given below. It is to be noted that the meanings of symbols used in the set of equations are collectively described at the end of this document.

First of all, the electric-field distribution can be expressed by Eq. (1) given below. (For more information, refer to p. 26 to 29 of a reference authored by Motoichi Ohtsu with a title of "Optical Near Fields."

[Eq. 1]

$$E(x,z) = T_0 \exp\left\{-i\omega t + ik_2 \frac{x}{n} \sin\theta_1\right\} \exp\left\{-k_2 z \sqrt{\frac{1}{n^2}\sin^2\theta_1 - 1}\right\}$$

It is known that, by making use of an evanescent light beam PE in an illumination source, fluorescence information of only a field in the vicinity of a solid-liquid boundary surface can be fetched. This technique is actually adopted in a TIRF (Total Internal Reflection Fluorescence) microscope and the like. In this case, the fluorescence intensity defined as the intensity of a fluorescent light beam generated by the fluorescent substance is a linear function of evanescent light beam PE. Thus, if a time average of the fluorescence-intensities is to be found, the fluorescence intensity is not dependent on the position (x). Accordingly, Eq. (1) expressing the electric-field distribution as described above can be rewritten into Eq. (2) given as follows.

[Eq. 2]

$$I(z) = I_0 \exp 2\left\{-k_2 z \sqrt{\frac{1}{n^2}\sin^2\theta_1 - 1}\right\}$$

In addition, if d is defined by Eq. (3) given below, Eq. (4) can be derived as follows.

[Eq. 3]

$$d = \frac{\lambda}{4\pi\sqrt{n_1^2 \sin^2\theta_1 - n_2^2}}$$

[Eq. 4]

$$I(z) = I_0 \exp\left(-z/d\right)$$

A quantity denoted by symbol d in Eqs. (3) and (4) is dependent on the mediums, the angle of incidence and the wavelength. The smaller the value of the quantity d, the smaller the displacement at which the intensity of the evanescent light beam PE attenuates. In this case, with the evanescent light beam PE used as a light beam for exciting a fluorescent light beam, if a change in fluorescence intensity (= $kI(z)$) is obtained before and after a phenomenon in which the position (z) of the fluorescent substance changes from the state of Z1 to the state of Z2 in the same evanescent-light field, it is possible to compute and analyze a positional change (or a displacement) of the fluorescent substance as shown by Eq. (5), which can be derived by making use of Eq. (4).

[Eq. 5]

$$\Delta z = z_2 - z_1 = d \ln \frac{I_1}{I_2}$$

By referring to Figs. 3 and 4, the following description explains embodiments each implementing a measurement system adopting a technique for measuring information on the position of a fluorescent substance located in a vicinity field A existing in close proximity to the boundary surface A on the basis of, among others, Eq. (5) with the evanescent light beam PE used as a light beam for exciting a fluorescent light beam.

First of all, in the embodiment shown in Fig. 3, one end of a nucleic acid chain serving as a detection-subject substance T is fixed on a boundary surface S allowing an evanescent light beam PE to be generated. The other end of the detection-subject substance T is marked with a fluorescent substance (a fluorescent chromatophore) F. Symbol T1 denotes the detection-subject substance T in an initial state (I). As shown in the figure, the detection-subject substance T1 exists, twining to form a random coil shape. The fluorescent substance F exists at a position close to the boundary surface S. Assume that the fluorescence intensity obtained by the evanescent light beam PE at that time is 11.

Then, the physical or chemical condition of a reaction field R is changed. For example, when an electric field is applied to the reaction field R, it is possible to extend the nucleic acid chain serving as the detection-subject substance T with one end of the nucleic acid chain fixed on the boundary surface S as it is. Thus, the distance from the boundary surface S to the fluorescent substance F can be made longer as shown by symbol T2 in Fig. 3. The fluorescence intensity 12 obtained by the evanescent light beam PE at that time is an intensity attenuating from the aforementioned fluorescence intensity I1 as shown in Fig. 2.

By substituting the fluorescence intensity I1 obtained in the initial state (I) and the fluorescence intensity 12 obtained after the physical or chemical condition of the reaction field R is changed into Eq. (5), the numerical value of the change of the distance from the boundary surface S to the fluorescent substance F put as a mark on the detection-target substance T, that is, the displacement (or $\Delta z$ shown in Fig. 2) can be found. Thus, with such a measurement system, for example, it is possible to obtain information on effects of a change in external condition on the structure and shape of the nucleic acid chain serving as a detection-subject substance. An example of the structure of the nucleic acid chain is the high-order structure of the chain.

In addition, it is known that, when a nucleic acid molecule is put in a state of being affected by the effect provided by an electric field at a liquid phase, the nucleic acid molecule is extended or moved. As its principle, it is conceivable that an ion cloud is created by phosphorous acid ions (with negative electric charge) forming a skeleton and hydrogen atoms (with positive electric charge) obtained as a result of ionization of hydrogen existing in the surroundings of the phosphorous acid ions. A polarization vector (or a two-pole vector) generated by the negative electric charge and the positive electric charge is, as a whole, oriented in one direction due to application of a high-frequency high-level voltage. As a result, the nucleic acid molecule is extended. In addition, if a non-uniform electric field is applied, the nucleic acid molecule moves to a portion at which electric-force lines are concentrated. For more information, refer to "Quantitative analysis on electrostatic orientation of DNA in stationary AC electric field using fluorescence anisotropy" authored by Seiichi Suzuki, Takeshi Yamanashi, Shin-ichi Tazawa, Osamu Kurosawa and Masao Washizu, IEEE Transaction on Industrial Applications, Vol. 34, No. 1, P75 to 83 (1998).

Fig. 4 is an explanatory diagram referred to in describing another embodiment for measuring the positional information of a fluorescent substance existing in a vicinity field A located in close proximity to a boundary surface S. That is to say, Fig. 4 is an explanatory diagram referred to in describing the concept of a typical application made possible by the present invention as an application in which a hybridization is detected.

First of all, in this embodiment, one end of a probe nucleic acid chain X adopting a self-loop structure and having a base-sequence structure is marked with a fluorescent substance (a fluorescent chromatophore) F whereas the other end is fixed to the boundary surface S. Since the probe nucleic acid chain X1 in a state shown in Fig. 3 (I) is put in a state of forming the self-loop structure, the fluorescent substance F exits at a position close to the boundary surface S. Let the intensity of a fluorescent light beam excited by an evanescent light beam PE generated at that time be I1 for example.

Then, when a nucleic acid chain Y having a base-sequence member mutually complementary to that of the probe nucleic acid chain X is introduced into a reaction field R above the boundary surface S, the self-loop structure of the nucleic acid chain X (strictly speaking, X1) is dissolved to result in a double-strand nucleic acid chain composing of the nucleic acid chain X (strictly speaking, X2) and the nucleic acid chain Y. At that time, the distance between the fluorescent substance F put as a mark on the probe nucleic acid chain X (strictly speaking, X2) and the boundary surface S becomes longer as shown in Fig. 4 (II). Let the intensity of a fluorescent light beam excited by an evanescent light beam PE generated at that time be I2 (where I2 < I1) for example.

By substituting the fluorescence intensity I1 obtained in the initial state (I) and the fluorescence intensity I2 described above into Eq. (5), the numerical value of the change in distance from the boundary surface S to the fluorescent substance F put as a mark on the probe nucleic acid chain X, that is, the displacement (or $\Delta z$ shown in Fig. 2) can be found. Thus, with such a measurement system, for example, it is possible to detect the existence/non-existence and/or progress state of a hybridization of the probe nucleic acid chain X.

As is obvious from the embodiments shown in Figs. 3 and 4, in accordance with the present invention, it is possible to obtain information on structure changes of a substance and/or interactions between substances. In addition, by monitoring and/or measuring the fluorescence intensity in a real-time manner, it is possible to obtain various kinds of information such as a dynamic change occurring in a substance with the lapse of time and the state of progress of an interaction between substances.

Fig. 5 is a diagram showing a model of a concept according to an embodiment implementing a sequence-base determination method provided by the present invention.

In this embodiment, first of all, a protein E marked with a fluorescent substance F is held on a boundary surface S by, for example, fixing the protein E to the boundary surface S. The protein E has a structure, which changes when the protein E is joined to the base of a single-strand nucleic acid chain N or the base pair of a double-strand nucleic acid chain N. It is to be noted that means for holding or fixing the protein E to the boundary surface S can be properly determined in accordance with the objective.

The protein E or a nucleic acid chain denoted by symbol N in Fig. 5 has a function to move itself when the protein E is joined to the nucleic acid chain N. Thus, it is desirable to make use of a protein E that has a property of demonstrating a peculiar structure change depending on the type of the base of a single-strand nucleic acid chain N or the base pair of a double-strand nucleic acid chain N in a process of joining the protein E to the single-strand nucleic acid chain N or the double-strand nucleic acid chain N. For example, a DNA helicase or polymerase can be used as the protein E.

Fig. 5 (I) is a diagram showing a state which results when a protein E (E1) is joined to a nucleic acid chain N introduced into a reaction field R above a boundary surface S. At that time, a fluorescent substance F put on the protein E1 as a mark exists at a position separated away from the boundary surface S by a distance z1 and generates a fluorescent light beam with an intensity of I1 as a fluorescent light beam excited by an evanescent light beam PE, which is shown in Fig. 1 but not shown in Fig. 5.

It is to be noted that, even though the nucleic acid chain N shown in Fig. 5 is a chain, the nucleic acid chain N can also be a pair of chains. In addition, even though this embodiment implements a method for putting the fluorescent substance F on the protein E, in accordance with the objective, it is also possible to properly adopt a method for detecting the intensity of a fluorescent light beam generated by an amino acid, which demonstrates a property of emitting a fluorescent light beam and is used for composing the protein E itself. An example of the amino acid is the tryptophan.

Fig. 5 (II) is a diagram showing a state in which the nucleic acid chain N is sled with respect to the protein E in units each composed a base or a plurality of bases. At that time, if the type of the base joined to the protein E or the combination of bases joined to the protein E varies, the structure of the protein E changes as evidenced by the protein denoted by symbol E2 in Fig. 5 (II). It is to be noted that, in the case of a nucleic acid chain N including a pair of chains, the structure of the protein E changes if the type of the base pair joined to the protein E or the combination of base pairs joined to the protein E varies. At that time, the fluorescent substance F put on the protein E as a mark exists at a position separated away from the boundary surface S by a distance z2, which is typically smaller than the distance z1 mentioned before (or z2 < z1), and generates a fluorescent light beam with an intensity of I2 as a fluorescent light beam excited by an evanescent light beam PE, which is shown in Fig. 1 but not shown in Fig. 5. Typically, the intensity I2 is a quantity attenuating from the intensity I1 cited earlier (or I2 > I1).

Before the fluorescence intensity is measured as described above, fluorescence-intensities of the protein E above the boundary surface S are measured in advance as intensities each having a correlation with the type of the aforementioned base (or the type of the base pair cited above) and/or the combination of bases (or base pairs), and a computer serving as the analysis section C shown in Fig. 1 stores the measured intensities in a storage section in advance as a database. Then, a data processing section employed in the computer executes a program stored in advance in order to automatically collate the measured fluorescence-intensities I1 and I2 with the database. In this way, the base sequence of the nucleic acid chain N is determined.

A base-sequence determination apparatus capable of implementing the method for determining a base sequence typically has a configuration like the one shown in Fig. 1. The base-sequence determination apparatus has at least sections described as follows. To begin with, the base-sequence determination apparatus has a boundary surface S capable of generating an evanescent light beam PE. In the base-sequence determination apparatus, first of all, a protein E marked with a fluorescent substance F is held on the boundary surface S in advance. The protein E has a structure, which changes when the protein E is joined to the base of a single-strand nucleic acid chain N or the base pair of a double-strand nucleic acid chain N.

Then, the evanescent light beam PE excites the fluorescent substance F put as a mark on the protein E to generate a fluorescent light beam f. The apparatus also has a fluorescent-light intensity detection section D capable of continuously measuring the intensity of the fluorescent light beam f. In addition, the base-sequence determination apparatus also employs a database storage section used for storing a fluorescence-intensity database (or a basic database) provided for the protein E as a database of fluorescence-intensities having correlations with types of the base of a single-strand nucleic acid chain or types of the base pair of a double-strand nucleic acid chain. The base-sequence determination apparatus also employs the aforementioned data processing section for automatically collating a fluorescence intensity obtained as a measurement result with the fluorescence-intensity database in order to determine the base sequence of the nucleic acid chain. It is to be noted that the database storage section and the data processing section are included in the analysis section C employed in the substance-information measurement apparatus shown in Fig. 1.

That is to say, in accordance with the base-sequence determination method and the base-sequence determination apparatus, first of all, a protein E marked with a fluorescent substance F is held in advance on a boundary surface S by, for example, fixing the fluorescent substance F to the boundary surface S. Then, when a single-strand nucleic acid chain N or a double-strand nucleic acid chain N is moved with respect to the protein E, the structure of the protein E changes in accordance with the type of the base of the single-strand nucleic acid chain N or the type of the base pair of the double-strand nucleic acid chain N, changing the intensity of a fluorescent light beam generated by fluorescent substance F. This is because the change in structure varies the position of the fluorescent substance F, that is, the distance from the boundary surface S to the position of the fluorescent substance F. By keeping track of the change in fluorescence intensity, fluorescence intensity data can be obtained and automatically collated with a fluorescence-intensity database stored in advance for the protein E as a database of fluorescence-intensities having correlations with types of the base or types of the base pair. In this way, the base sequence of the nucleic acid chain N can be determined continuously and automatically.

[First Embodiment]

Experiments were carried out as experiments of measuring an average of length changes, which are observed in a short-chain DNA as changes resulting from application of an electric field to the DNA, on the basis of the measurement principle and the measurement method, which have been described above.

To put it more concretely, a cell having electrodes facing each other in the vertical direction was created. The cell to be used as a reaction field had a diameter of 200 $\mu$m and a height (or a depth) of 5 $\mu$m. The bottom of the cell was used as a generator of an evanescent light beam. One end of a DNA was fixed on the bottom of the cell by carrying out a chemical junction process. The other end of the DNA was marked with a fluorescent chromatophore, which was Cy3. Then, the fluorescence intensity probably changing in accordance with the position of the fluorescent chromatophore was measured before and after the application of an electric field. The fluorescence intensity was measured by making use of a microscope.

If the fluorescence intensity is measured under a total reflection/incidence condition, the measurement will raise a problem that a fluorescence-intensity change caused by a variation observed in the intensity of an evanescent light beam and a fluorescence-intensity change caused by a temperature variation due to the application of an electric field cannot be separated from each other.

In order to solve this problem, in this embodiment, a change was further made to the experimental measurement system and the measurement of the fluorescence intensity was also carried out by making use of a vertical incident light beam at the same time in an effort made to separate a fluorescence-intensity change caused by a variation of the intensity of an evanescent light beam and a fluorescence-intensity change caused by a temperature variation due to the application of an electric field from each other. That is to say, in an excitement process making use of a vertical incident light beam, the intensity of an excited light beam does not change in accordance with a distance from the substrate. Thus, the fluorescent chromatophore (or a Cy3 molecule) generates an excited fluorescent light beam having a constant intensity without regard to the position of the fluorescent chromatophore. That is to say, the fluorescence intensity is a function of temperature only. Fig. 6 shows curves representing results of experiments carried out on the basis of the experimental measurement system cited above. As shown in the figure, the changes in fluorescence intensity are dependent on the height of the source generating a fluorescent light beam as excited by an evanescent light beam (or the distance from the boundary surface to the source).

The results shown in Fig. 6 are results of experiments carried out by applying an electric field of 6.5 Vpp / $\mu$m to three kinds of Cy3-modified oligo DNA, i. e., 1 mer, 30 mer and 90 mer. Symbol TIRF shown in Fig. 6 denotes a result obtained by making use of an evanescent light beam as an exciting light beam while symbol TRANS shown in the same figure denotes a result obtained by making use of a vertical incident light beam as an exciting light beam.

In the case of 1 mer shown by the lowest curve in Fig. 6, the difference between the change in fluorescence intensity for TIRF making use of an evanescent light beam as an exciting light beam and the change in fluorescence intensity for TRANS making use of a vertical incident light beam as an exciting light beam is only a magnitude of the order of a noise level. In the case of 30 mer and 90 mer, which are shown by respectively the middle and uppermost curves in Fig. 6, on the other hand, the difference between the change in fluorescence intensity for the TIRF case and the change in fluorescence intensity for the TRANS case is obviously greater than the magnitude of the order of a noise level. It is to be noted that, in each case, the intensity change caused by an increase in temperature is approximately in the range 2.5 to 3.0%. A computation making use of another result obtained for a characteristic representing a relation between the fluorescence intensity and the temperature indicates that the intensity change in this range corresponds to a temperature increase smaller than 1°C.

In both the cases of 30 mer and 90 mer, the fluorescence intensity for TIRF making use of an evanescent light beam as an exciting light beam is further reduced from a baseline by about 1.7%. On the basis of these results, the length of the extended DNA was computed. As a result, in the case of the DNAs for both 30 mer and 90 mer, the average length was known to have changed by about 3 nm.

That is to say, by carrying out the experiments, the fluorescence-intensity changes caused by temperature changes experienced by the reaction solution as temperature changes caused by application of an electric field were excluded. With such fluorescence-intensity changes excluded, a high-order structure change of the DNA could be detected on the basis of fluorescence-intensity changes caused by changes of the intensity of the evanescent light beam.

[Second Embodiment]

In the case of a second embodiment, experiments were carried out as experiments to measure an average value of length changes caused by variations of a high-concentration environment of biological macromolecules on the basis of the measurement principle and the measurement method, which are described above.

One end of a 90 mer ssDNA was fixed on the glass bottom of a glass-bottom dish. The other end of the ssDNA was marked with a fluorescent chromatophore, which was Cy3. The glass-bottom dish was filled up with pure water or saline. The boundary surface of the glass bottom was made a surface satisfying the total reflection condition. An exciting laser beam was introduced in order to generate an evanescent light beam.

In Fig. 7, symbol (I) denotes a pure-water environment whereas symbol (II) denotes an environment, which is obtained as a result of dropping NaCl of 10 mM to the pure-water environment (I) to yield a final concentration of 2 mM upon the lapse of a 15-second period. Symbol (III) denotes a state, which is obtained as a result of further dropping NaCl of 2 mM to the 2mM NaCl environment (II) upon the lapse of another 15-second period since the creation of the 2mM NaCl environment (II). Fig. 7 is a diagram showing results of measuring the fluorescence intensity, which changes in accordance with the position of the fluorescent chromatophore, along the time axis for the environments (I), (II) and (III).

As shown in Fig. 7, it is obvious that the intensity of a fluorescent light beam generated by the fluorescent chromatophore put as a mark on the ssDNA in the pure-water environment increases after the dropping of NaCl. That is to say, it is known that, with the dropping of NaCl, a fluorescent mark, which is the fluorescent chromatophore put as a mark on the ssDNA, approaches the glass boundary surface. This phenomenon is explained by referring to Fig. 8 as follows. In an initial state (I) shown in the figure, the DNA chain in the pure-water environment is put in state of being extended due to electrostatic repulsions among ions composing the DNA. A state (II) shown in the figure is obtained as a result of dropping NaCl. In the state (II), the strength of each ion in the solution filling up the space above the glass bottom increases due to the dropping of the NaCl. Thus, ions composing the DNA are shaded from each other to result in reduced electrostatic repulsions in the DNA. As a result, the structure of the DNA is conceivably contracted.

The change in fluorescence intensity was computed by making use of Eq. (5). As a result, the displacement from the position occupied by the fluorescent chromatophore put on the ssDNA as a mark as a position prior to the dropping of the NaCl to the position of the fluorescent chromatophore after the dropping of the NaCl was found to be about 2 nm. It is thus known that, in accordance with the measurement method provided by the present invention, an extremely infinitesimal displacement of the nanometer order can be measured. In addition, it is also known that, by adoption of the method provided by the present invention, a molecular-structure change caused by a salt concentration or the like can be traced. An example of the molecular-structure change caused by a salt concentration is a change of the high-order structure of a nucleic acid.

[Industrial Applicability]

For example, the present invention can be used as a technology for detecting a variety of changes as well as a variety of states and a technology for monitoring the changes. The detected and monitored changes include a change of the structure of a substance, a change of the shape of a substance and a change of the unit structure of a protein. The structure of a substance includes a first-order, second-order, third-order and high-order structures of a biological structure. The detected states include the state of generation of an interaction, the state of the progress of the interaction and the state of diffusion of a substance. The interaction includes a hybridization, an antigen-antibody reaction, an interaction between proteins, a reaction between macromolecules, a reaction between macromolecules and low molecules and a reaction between low molecules.

The meanings of symbols used in the set of equations given earlier are explained as follows.

I: Fluorescence intensity defined as the intensity of a fluorescent light beam
P: Light beam (an incident light beam)
PE: Evanescent light beam (Evanescent illumination light beam)
S: Boundary surface
T: Detection-subject substance
Z: Position of a fluorescent substance or distance from the boundary surface S to the position
$\Delta z$: Displacement
$E(x, z)$: Electric-field strength at a location $(x, z)$
To: The amplitude of an electric field
.: Angular frequency
$k_2$: The number of waves in medium 2
n: Refractive index
$\theta_1$: Angle of incidence
Io: Reference intensity of the fluorescence intensity (Normalization intensity)
$n_1$: Refractive index of medium M1
$n_2$: Refractive index of medium M2
d: Fluorescence intensity (Thickness reference of the evanescent-light intensity)
$z_1$: Position (distance from the boundary surface) in state 1
$z_2$: Position (distance from the boundary surface) in state 2
$I_1$: Fluorescence intensity in state 1
$I_2$: Fluorescence intensity in state 2

**Claims**

1. A substance-information acquisition method, a detection-subject substance is put in a boundary surface area capable of generating an evanescent light beam and information on the position of said detection-subject substance is acquired on the basis of the intensity of a fluorescent light beam generated by said detection-subject substance excited by said evanescent light beam as an original light beam of said detection-subject substance.

2. The substance-information acquisition method according to claim 1, wherein said detection-subject substance is fixed on said boundary surface area.

3. The substance-information acquisition method according to claim 1, information on a displacement of said detection-subject substance is obtained by acquiring fluorescence-intensity information before a change of a physical or chemical condition of a reaction field in which said detection-subject substance exists and fluorescence-intensity information after said change.

4. The substance-information acquisition method according to claim 3, wherein said information on a displacement is information on a quantity bringing about a change of the structure or shape of said detection-subject substance.

5. The substance-information acquisition method according to claim 1, the intensity of said fluorescent light beam generated by said detection-subject substance excited by said evanescent light beam is monitored in a real-time manner.

6. The substance-information acquisition method according to claim 1, wherein said information on the position of said detection-subject substance is nano-scale positional information.

7. The substance-information acquisition method according to claim 1, said information on the position of said detection-subject substance is determined by correcting data of a measured intensity of said fluorescent light beam on the basis of standard data acquired in advance.

8. A substance-information measurement apparatus comprising:

    a light source;
    a boundary surface capable of generating an evanescent light beam due to a light beam generated by said light source to hit said boundary surface;
    a fluorescent light detection section for detecting the intensity of a fluorescent light beam generated by a detection-subject substance existing on said boundary surface as a substance excited by said evanescent light beam; and
    an analysis section for automatically analyzing the position and/or displacement of said detection-subject substance in a reaction field on the basis of said intensity of said fluorescent light beam and an attenuation rate exhibited by said evanescent light beam as an attenuation rate having a correlation with a distance from said boundary surface.

9. The substance-information measurement apparatus according to claim 8, said substance-information measurement apparatus further provided with a reaction-field condition control section capable of changing a physical or chemical condition of said reaction field provided on a boundary-surface side opposite to a boundary-surface side, through which said light beam generated by said light source is propagating in the forward direction toward said boundary surface, as a field facing said boundary surface.

10. The substance-information measurement apparatus according to claim 9, wherein said reaction-field condition control section includes field applying means for applying an electric field to said reaction field.

11. A base-sequence determination method for determining a base sequence of a single-strand nucleic acid chain or a double-strand nucleic acid chain by execution of procedures for:

    letting a protein be held in advance in a boundary-surface area capable of generating an evanescent light beam as a protein having a structure, which changes when said protein is joined to a base of said single-strand nucleic acid chain or a base pair of said double-strand nucleic acid chain;
    joining said protein to said single-strand nucleic acid chain or said double-strand nucleic acid chain;
    continuously measuring the intensity of a fluorescent light beam, which is generated by said protein excited by said evanescent light beam as the original fluorescent light beam of said protein, along the time axis; and
    automatically collating fluorescent-light intensity data obtained as a result of said continuous-measurement procedure with a fluorescent-light intensity database provided for said protein as a database reflecting correlations with types of said base or types of said base pair.

12. The base-sequence determination method according to claim 11 wherein the structure of said protein changes in recognition units each comprising a plurality of said bases or a plurality of said base pairs.

13. A base-sequence determination apparatus comprising:

    a boundary surface for holding a protein having a structure, which changes when said protein is joined to a base of a single-strand nucleic acid chain or a base pair of a double-strand nucleic acid chain, after putting a fluorescent substance on said protein in advance as a mark and for generating an evanescent light beam;
    a fluorescence-intensity detection section capable of continuously measuring the intensity of a fluorescent light beam generated by said fluorescent substance as the original fluorescent light beam of said protein excited by said evanescent light beam;
a database storage section used for storing a fluorescent-light intensity database provided for said protein as a database reflecting correlations with types of said base or types of said base pair; and
a data processing section for automatically collating fluorescent-light intensity data obtained as a result of said measurement carried out by said fluorescence-intensity detection section with said fluorescent-light intensity database in order to determine a base sequence of said single-strand nucleic acid chain or a base sequence of said double-strand pair of nucleic acid chain.

**Amended claims under Art. 19.1 PCT**

**14.** Amended) The substance-information acquisition method according to claim 4, wherein
said detection-subject substance is a detection-subject nucleic acid chain fixed on said boundary surface area, and
information on a displacement caused by extension of said detection-subject nucleic acid chain is obtained.

**15.** Amended) The substance-information measurement apparatus according to claim 8, wherein
said detection-subject substance is a detection-subject nucleic acid chain fixed on said boundary surface area, and
a structure change based on a hybridization reaction between said detection-subject nucleic acid chain and a target nucleic acid chain as a structure change of said detection-subject is analyzed.

# FIG.1

# F I G . 2

# F I G . 3

(I)

(II)

# FIG.4

( I )                                                    ( II )

R

X(X₁)

S                          F

$X(X_1)$

$X(X_2)$

# FIG.5

(I)

R

F

E(E₁)

N

Z₁

S

(II)

R

F

E(E₂)

N

Z₂

S

# FIG.6

EP 1 901 057 A1

# FIG. 7

NORMALIZED FLUORESCENCE INTENSITY

TIME [SECONDS]

DROPPING

△: I (DI)
○: II (DI + 10mM NaCl(final 2mM))
◇: III (2mM NaCl + 2mM NaCl)

CONTRACTION ◀

EXTENSION ▶

19

# F I G . 8

( I )                                    ( II )

NaCl

Cy3

REPULSION
AREA

Cy3

REPULSION
AREA (WITH
IONS SHADED)

## INTERNATIONAL SEARCH REPORT

| | International application No. |
|---|---|
| | PCT/JP2006/312310 |

A. CLASSIFICATION OF SUBJECT MATTER
*G01N21/64*(2006.01)i, *G01B11/30*(2006.01)i, *G01N33/53*(2006.01)n, *G01N33/543*
(2006.01)n, *G01N33/566*(2006.01)n

According to International Patent Classification (IPC) or to both national classification and IPC

B. FIELDS SEARCHED

Minimum documentation searched (classification system followed by classification symbols)
G01N21/00-G01N21/83

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)
JMEDPlus(JDream2), JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X<br>Y | Tadao SUGIURA, "Jisedai DNA Microarray Keisoku Gijutsu", BME, [ISSN:0913-7556], Vol.18, No.3, 10 July, 2004 (10.07.04), pages 29 to 36 | 1-2,5-6<br>3-4,7-10 |
| Y | JP 2005-77143 A (Fujitsu Ltd.), 24 March, 2005 (24.03.05), Figs. 1, 17; Par. Nos. [0042] to [0074], [0103] to [0109] & US 2005/048551 A1 | 3-4,7-10 |
| P,X | JP 2006-38816 A (Nara Institute of Science and Technology), 09 February, 2006 (09.02.06), Figs. 1 to 9; Claims & WO 2006/011346 A1 | 1-2,5-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 August, 2006 (22.08.06) | 29 August, 2006 (29.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/312310 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2006-90782 A  (Fuence Co., Ltd.),<br>06 April, 2006 (06.04.06),<br>Claims; Par. Nos. [0005], [0016]<br>& WO 2006/033356 A1 | 1 |
| A | JP 11-218491 A  (Tosoh Corp.),<br>10 August, 1999 (10.08.99),<br>Par. No. [0021]<br>(Family: none) | 1 |
| A | JP 9-503921 A  (Incyte Pharmacetricals,<br>Inc.),<br>22 April, 1997 (22.04.97),<br>Pages 26 to 37<br>& WO 95/20681 A1        & EP 748390 A1<br>& FI 962987 A         & EE 9600097 A<br>& LV 11696 B          & AU 688465 B2 | 11-13 |

Form PCT/ISA/210 (continuation of second sheet) (April 2005)

**INTERNATIONAL SEARCH REPORT**

| International application No. |
| --- |
| PCT/JP2006/312310 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an
    extent that no meaningful international search can be carried out, specifically:

3. ☐ Claims Nos.:
    because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
   (1) The inventions of claims 1-10 have "a special technical feature" relating
to acquisition of the position information on a substance to be detected.
   (2) The inventions of claims 11-13 have "a special technical feature" relating
to a decision of base arrangement of nucleic acid.
   There is no technical relationship among those inventions involving one
or more of the same or corresponding special technical features.  Accordingly,
the inventions are not so linked as to form a single general inventive concept.

1. ☒ As all required additional search fees were timely paid by the applicant, this international search report covers all searchable
    claims.

2. ☐ As all searchable claims could be searched without effort justifying an additional fee, this Authority did not invite payment of
    any additional fee.

3. ☐ As only some of the required additional search fees were timely paid by the applicant, this international search report covers
    only those claims for which fees were paid, specifically claims Nos.:

4. ☐ No required additional search fees were timely paid by the applicant.   Consequently, this international search report is
    restricted to the invention first mentioned in the claims; it is covered by claims Nos.:

**Remark on Protest**
the
☐ The additional search fees were accompanied by the applicant's protest and, where applicable,
payment of a protest fee..

☐ The additional search fees were accompanied by the applicant's protest but the applicable protest
fee was not paid within the time limit specified in the invitation.

☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003294631 A

- JP 10221339 A

**Non-patent literature cited in the description**

- **SEIICHI SUZUKI ; TAKESHI YAMANASHI ; SHIN-ICHI TAZAWA ; OSAMU KUROSAWA ; MASAO WASHIZU.** Quantitative analysis on electrostatic orientation of DNA in stationary AC electric field using fluorescence anisotropy. *IEEE Transaction on Industrial Applications,* 1998, vol. 34 (1), 75-83